Europäisches Patentamt

European Patent Office

Office européen des brevets

(19)

(11) **EP 0 595 131 B1**

(12) **EUROPÄISCHE PATENTSCHRIFT**

(45) Veröffentlichungstag und Bekanntmachung des Hinweises auf die Patenterteilung:
**29.05.1996  Patentblatt 1996/22**

(51) Int Cl.[6]: **C09C 1/62**, C09C 1/64

(21) Anmeldenummer: **93116696.1**

(22) Anmeldetag: **15.10.1993**

(54) **Verfahren zur Passivierung von Metallpigmenten**

Passivation process for metallic pigments

Procédé de passivation de pigments métalliques

(84) Benannte Vertragsstaaten:
**CH DE ES FR GB IT LI**

(30) Priorität: **28.10.1992  DE 4236332**

(43) Veröffentlichungstag der Anmeldung:
**04.05.1994  Patentblatt 1994/18**

(73) Patentinhaber: **BASF Aktiengesellschaft**
**D-67063 Ludwigshafen (DE)**

(72) Erfinder:
• **Schmid, Raimund, Dr.**
  **D-6730 Neustadt (DE)**
• **Mronga, Norbert, Dr.**
  **D-6915 Dossenheim (DE)**
• **Gonzales Gomez, Juan Antonio, Dr.**
  **D-6700 Ludwigshafen (DE)**

(56) Entgegenhaltungen:
EP-A- 0 033 457            EP-A- 0 571 836
EP-A- 0 580 022           WO-A-91/17217
DE-A- 2 454 138           DE-C- 466 463
DE-U- 9 207 357

## Beschreibung

Die Erfindung betrifft ein neues Verfahren zur Herstellung gegen hydroxylgruppenhaltige Verbindungen passivierter, insbesondere auch wasserbeständiger Metallpigmente, insbesondere solcher auf Basis metalloxidbeschichteter oder unbeschichteter Aluminiumflakes.

Aus Gründen des Umweltschutzes sind in den letzten Jahren verstärkt Lacksysteme mit möglichst geringem Gehalt an Lösungsmitteln entwickelt worden. Der weitgehende Austausch organischer Lösungsmittel gegen Wasser führte zu großen Schwierigkeiten bei der Herstellung von metallpigmenthaltigen Lacken und Druckfarben.

Metallpigmente, wie beispielsweise Aluminiumflakes, reagieren mit Wasser exotherm gemäß

$$2\,Al + 6\,H_2O \rightarrow Al\,(OH)_3 + 3\,H_2$$

unter Freisetzung von Wasserstoff. Die Veränderung der Pigmentoberflächen, im Extremfall die völlige Zerstörung der Pigmente, und die reduzierenden Eigenschaften des freigesetzten Wasserstoffs, die zu chemischen Veränderungen, z.B. an im Lack vorhandenen transparenten Buntpigmenten, führen können, beeinträchtigen die optischen Eigenschaften des Lacks (z.B. Glanz, Brillanz, Farbton) stark. Zudem führt die Wasserstoffentwicklung zu einem beträchtlichen Wasserstoffdruck im Innern von Lagerbehältnissen und damit zu einer ernsthaften Gefährdung im Umgang damit.

Andererseits erfreuen sich aber gerade Metallic-Überzüge, die den damit versehenen Gegenständen Glanz und brillantes Aussehen verleihen, in den letzten zwei Jahrzehnten ständig wachsender Beliebtheit.

Es finden sich daher insbesondere in der Patentliteratur schon eine Vielzahl von Vorschlägen zur Lösung des oben geschilderten Problems. Eine kurze Übersicht ist in der Publikation "Aluminiumpigmente für wäßrige Beschichtungen - Widerspruch oder Wirklichkeit" von R. Besold, W. Reißer und E. Roth in Farbe + Lack 97, 4/1991, S. 311 - 314, enthalten.

Danach lassen sich die Verfahren zur Stabilisierung von Aluminiumpigmenten für wäßrige Systeme in 2 Gruppen einteilen. Zum einen werden die Pigmente mit einer schützenden Beschichtung umhüllt. Diese kann organischer Natur sein, wie z.B. die in der AT-A-372 696 oder der EP-A-0 319 971 beschriebenen phosphorsäuremodifizierten Harze. Die Phosphorsäuregruppen fungieren dabei als Haftvermittler zwischen der anorganischen Oberfläche des Pigments und der organischen Umhüllung. Ebenso kann eine schützende Beschichtung auch anorganischer Natur sein, wie beispielsweise die in der US-A-2 885 366 offenbarten $SiO_2$-gecoateten Al-Flakes oder die $Fe_2O_3$-, $Cr_2O_3$- oder $TiO_2$-beschichteten Al-Pigmente (EP-A-0 033 457, die nicht vorveröffentlichten EP-A-0 580 022 und 0 571 836, US-A-5 026 429 oder DE-A-24 54 138) zeigen.

Zum anderen lassen sich Al-Pigmente durch die Adsorption von Korrosionsinhibitoren an der Pigmentoberfläche schützen. Korrosionsinhibitoren werden an den reaktiven Stellen der Pigmentoberflächen chemisorbiert, wodurch diese Stellen gegenüber Wasser unempfindlich werden. Verwendung finden dabei Chromate (EP-A-0 259 592, US-A-2 904 523), Vanadate (EP-A-0 305 560, EP-A-0 104 075) Dimersäuren (DE-A-30 02 175), Phosphorsäureester (DE-A-30 20 073, EP-A-0 170 474, US-A-4 565 716, US-A-4 808 231) oder Phosphate (z.B. EP-A-0 305 560, EP-A-0 240 367).

Die gängigen Verfahren zur Stabilisierung der Pigmente gegenüber Wasser beruhen darauf, daß die zu behandelnden Pigmente als Suspension in Wasser oder einem organischen Lösungsmittel mit den stabilisierenden Reagenzien behandelt werden. Dabei fallen in der Regel zu entsorgende, schwermetallbelastete Abwässer oder organische Lösungsmittel an, die Restmengen der zur Stabilisierung verwendeten Substanzen enthalten können. Zudem ist die Stabilität der oben erwähnten mit $TiO_2$ oder $Fe_2O_3$ anorganisch beschichteten Aluminiumpigmente gegen den Angriff von Wasser nicht in dem Maße verbessert, daß sie ohne weitere Maßnahmen in Wasserlacken eingesetzt werden könnten. Die herkömmlichen Verfahren zur Stabilisierung metalloxidbeschichteter Aluminiumpigmente führen somit zwangsläufig zu Produkten, bei denen zusätzliche Verfahrensschritte zur Passivierung notwendig sind.

Der Erfindung lag daher die Aufgabe zugrunde, Metallpigmente insbesondere auf Aluminiumbasis zu entwickeln, die die genannten Nachteile nicht aufweisen und sich durch vorteilhafte Anwendungseigenschaften auszeichnen und kostengünstig und umweltschonend herstellen lassen.

Demgemäß wurde ein Verfahren zur Passivierung von Metallpigmenten gegen hydroxylgruppenhaltige Verbindungen gefunden, welches dadurch gekennzeichnet ist, daß man verdampfbare Phosphorverbindungen und/oder Chromylchlorid in Anwesenheit von Wasserdampf in Gegenwart der Metallpigmente in der Gasphase zersetzt.

Für die erfindungsgemäß herstellbaren Pigmente kommen als Substrate alle für Metalleffektpigmente bekannten Metalle in Plättchenform in Betracht; z.B. sind neben Kupfer und seinen Legierungen, wie Messing oder Bronzen, sowie Eisen und seinen Legierungen vor allem Aluminium und seine Legierungen geeignet. Bevorzugt sind Aluminiumplättchen, die in einfacher Weise durch Herausstanzen aus Aluminiumfolie oder nach üblichen Verdüsungs- oder Mahltechniken erhalten werden. Es können handelsübliche Produkte verwendet werden, wobei die Metalloberfläche weitgehend frei von Fetten oder anderen Belegmitteln sein sollte,

Das erfindungsgemäße Verfahren ist natürlich ganz besonders vorteilhaft bei Substraten, bei denen vor der Passivierung schon eine Beschichtung in der Gasphase vorgenommen wurde, weil dann ohne Unterbrechung im gleichen Reaktor auch die Passivierung durchgeführt werden kann.

Daher sind vorteilhaft als Substrate bereits metalloxidbeschichtete Metallpigmente verwendbar, z.B. die in der US-A-5 026 429 beschriebenen titandioxidbelegten und besonders bevorzugt die gemäß EP-A-0 033 457 erhältlichen, eisenoxidbelegten Aluminiumflakes.

Die Größe der Substratteilchen ist an sich nicht kritisch und kann auf den jeweiligen Anwendungszweck abgestimmt werden. In der Regel haben die plättchenförmigen Teilchen Durchmesser von ungefähr 1 bis 200 μm, insbesondere etwa 5 bis 100 μm, und eine spezifische Oberfläche (BET) von 0,5 bis 15 m$^2$/g, insbesondere 1 - 7 m$^2$/g.

Erfindungsgemäß werden zur Passivierung verdampfbare Phosphorverbindungen oder Chromylchlorid verwendet. Mischungen von Passivierungsmitteln sind ebenfalls geeignet.

Eine besonders geeignete Vorrichtung zur Passivierung ist ein Wirbelschichtreaktor.

Ein Wirbelschichtreaktor besteht in der Regel aus einem von außen beheizbaren Rohr, das am unteren Ende einen von Gasen durchströmbaren Frittenboden enthält. Oberhalb des Frittenbodens befinden sich seitlich angebrachte Düsen zur Gaseinleitung. Der Austrag von Produkt am Kopf des Wirbelbetts wird durch Filter verhindert.

Durch Einleiten von Gas werden die zu passivierenden Substrate fluidisiert. Ein Teil des Gases wird dabei mit einer oder mehreren in den gasförmigen Zustand überführten Verbindungen beladen, die die Passivierung bewirken sollen. Diese Verbindungen reagieren aus der Gasphase heraus mit aktiven Stellen der zu schützenden Substratoberflächen (Pigmentoberflächen). In Abhängigkeit von der Struktur können die zudosierten, gasförmigen Verbindungen zunächst auch durch Reaktion untereinander die mit der Pigmentoberfläche reagierenden Spezies bilden.

Als verdampfbare, korrosionsschützende Verbindungen stehen eine ganze Reihe von Substanzen zur Verfügung.

Sehr gute Wasserbeständigkeiten erhält man z.B. durch Behandlung der zu schützenden Pigmente mit gasförmigen Verbindungen, die sich formal von den Sauerstoffsäuren des Phosphors ableiten.

Insbesondere sind beispielsweise die Tri- und Di-(C$_1$-C$_4$-alkyl)ester der Phosphorsäure der Formeln (RO)$_3$PO (R = Methyl, Ethyl, Propyl, Butyl, iso-Propyl oder iso-Butyl) und (RO)$_2$(HO)PO (R = Methyl, Ethyl) zu nennen.

Bevorzugt sind die Tri- und Di-(C$_1$-C$_2$-alkyl)ester der Phosphorigen Säure (RO)$_3$P und (RO)$_2$POH mit R Methyl oder Ethyl.

Ebenfalls sehr gute Wasserbeständigkeiten werden erhalten bei Verwendung von Phosphoroxyhalogeniden des Typs POX$_3$ (X = Halogen). Bevorzugt sind beispielsweise POCl$_3$, POBrCl$_2$, POBr$_2$Cl oder POBr$_3$.

Die Verwendung von Chromylchlorid (CrO$_2$Cl$_2$) führt zu gasphasenchromatierten Metallpigmenten; wegen der in der Gasphase fast quantitativen Umsetzung fallen die Schwierigkeiten, die das Abwasser bei naßchemischen Chromatierungen verursacht, weg.

Die durch Phosphatierung passivierten Pigmente enthalten im allgemeinen 0,01 bis 10, bevorzugt 0,1 bis 5 Gew.-% Phosphor.

Der Gehalt der chromatierten Pigmente an Chrom beträgt in der Regel ebenfalls 0,01 bis 10, vorzugsweise 0,1 bis 5 Gew.-%.

Die Passivierung der Metallpigmente im Wirbelschichtreaktor wird zweckmäßigerweise wie folgt durchgeführt:

Die zu passivierenden Substrate werden in den Reaktor eingefüllt und durch Einblasen von Stickstoff durch einen oder mehrere Einlässe fluidisiert. Abhängig von den Wirbeleigenschaften des jeweiligen Substrats werden dazu insgesamt etwa 200 - 1000 l/h Stickstoff benötigt. Nach dem Erhitzen auf die gewünschte Temperatur wird ein Teil der Wirbelgase durch ein Verdampfergefäß geleitet, das mit einer der flüchtigen Passivierungsverbindungen beschickt ist und in dem der Stickstoffstrom mit diesen Verbindungen beladen wird. Ein anderer Teil der Wirbelgase wird in einem weiteren, mit Wasser beschickten Verdampfergerät beladen und durch einen getrennten Einlaß in den Reaktor eingeleitet. Konzentrationen der in den gasförmigen Zustand überführten Phosphorverbindungen oder von Chromylchlorid, bezogen auf die in der gleichen Zeiteinheit in die Wirbelschicht eingeführten Gase, von in der Regel kleiner 3 Vol.-% sind zweckmäßig. Bevorzugt sind Konzentrationen der passivierenden Spezies von 0,001 - 0,5 Vol.-%. Die Menge des zudosierten Wasserdampfs hängt von der Konzentration der passivierenden Spezies ab. Die Wassermenge sollte mindestens stöchiometrisch sein, bevorzugt ist beispielsweise ein 10 - 100facher Überschuß an Wasserdampf. Die Zersetzung der Phosphorverbindungen oder von Chromylchlorid in Gegenwart von Wasserdampf führt zur Bildung der passivierenden Spezies.

Die Reaktortemperatur wird in Abhängigkeit von den verwendeten Ausgangsverbindungen gewählt. In der Regel erfordert die Passivierung Temperaturen von 100 bis 350°C. Wird beispielsweise eine Phosphatierung des Substrats ausgehend von Phosphoroxychlorid vorgenommen, so wird die Reaktionstemperatur vorzugsweise auf 130 bis 220°C eingestellt. Die für die Passivierung benötigte Zeit hängt insbesondere von der Temperatur und der Gasmenge ab. Sie kann ebenso wie die anderen Parameter leicht optimiert werden. Übliche Zeiten liegen im Bereich von 1 bis 10 Stunden. Nach beendigter Umsetzung läßt man den Reaktor vor dem Entleeren auf Raumtemperatur abkühlen.

Nach dem Entleeren des Reaktors können die Metallpigmente zur Verbesserung des Glanzes noch einem Polierschritt unterworfen werden. Das kann z.B. so geschehen, daß man die Pigmente zusammen mit ungefähr 50 Gew.-% Schwerbenzin in eine mit Edelstahlkugeln beschickte Kugelmühle einbringt und diese 8 Stunden auf einem Rollbrett bewegt.

Zur schnellen Überprüfung der Wirksamkeit der Passivierung, d.h. der Wasserbeständigkeit der Pigmente, dient beispielsweise der in DE-A-40 30 727 beschriebene Kochtest in Wasser. Dabei werden 1,5 g des zu testenden Metallpigments als Paste in 10 g Butylglycol vordispergiert und dann zu 150 g Wasser in eine gasdicht verschließbare Apparatur gegeben. Man erhitzt dann bis zum Sieden und registriert die Zeit, die bis zur Entwicklung von 400 ml Wasserstoff benötigt wird. Nichtstabilisierte Aluminiumpigmente oder lediglich metalloxidbeschichtete Aluminiumpigmente reagieren innerhalb weniger Minuten ab. Die erfindungsgemäß hergestellten Pigmente erfordern dagegen Kochzeiten von mindestens 15 Stunden, bis 400 ml Wasserstoff entwickelt sind.

Die folgenden Beispiele sollen die Erfindung näher erläutern.

Beispiel 1

Eine Mischung aus 100 g Aluminiumpulver (mittlerer Teilchendurchmesser 20 μm, BET-Oberfläche 4,5 $m^2/g$) und 100 g gröberem Aluminium (mittlerer Teilchendurchmesser 60 μm, BET-Oberfläche 1,5 $m^2/g$) wurde im Wirbelschichtreaktor durch Einleiten von insgesamt 800 l/h Stickstoff als Wirbelgas fluidisiert und auf 200°C erhitzt. 200 l/h der Wirbelgase wurden durch eine auf 70°C erwärmte und mit 10 ml $POCl_3$ beschickte Vorlage geleitet. Weitere 200 l/h $N_2$ wurden in einer zweiten auf 50°C erwärmten und mit Wasser beschickten Vorlage mit Wasserdampf beladen und in den Reaktor überführt. Der Rest der Wirbelgase wurde direkt durch die untere Öffnung des Reaktors über den Frittenboden eingeblasen. Nach etwa 2 Stunden war die gesamte $POCl_3$-Menge verbraucht.

Die Analyse ergab 0,41 Gew.-% P im passivierten Pigment. Im Kochtest entwickelte das Pigment nach 22 Stunden nur 90 ml Wasserstoff.

Vergleichsbeispiel 1

Die unbehandelte Mischung aus Beispiel 1 wurde dem Kochtest unterworfen. Nach wenigen Minuten zersetzten sich die Al-Pigmente unter starker Wasserstoffentwicklung.

Beispiel 2

150 g der gleichen Mischung wie in Beispiel 1 wurden ausgehend von Eisencarbonyl nach dem im EP-A-33 457 beschriebenen Verfahren bis zu einem goldenen Farbton mit Eisenoxid belegt und unmittelbar im Anschluß daran unter Verwendung von $POCl_3$ im gleichen Reaktor in der Gasphase phosphatiert.

Dazu wurden über eine mit 45 ml Eisencarbonyl beschickte und bei Raumtemperatur gehaltene Vorlage 200 l/h Stickstoff geleitet. Der mit $Fe(CO)_5$-Dampf beladene Stickstoffstrom wurde in den Reaktor eingedüst und dort bei 200°C oxidativ zu $Fe_2O_3$ zersetzt. Der für die oxidative Zersetzung notwendige Sauerstoff wurde über die zweite Öffnung des Reaktors durch Einblasen von 100 l/h Luft eingebracht. Wichtig ist dabei, daß die Konzentration des eingetragenen Carbonyldampfes bezogen auf die in der gleichen Zeiteinheit in die Wirbelschicht eingeführten Gase (Wirbelgase, Verbrennungsluft) 5 Vol.-% nicht übersteigt. Das sich bildende Eisenoxid zieht als Film auf die Aluminiumsubstrate auf und färbt diese zu einem goldenen Pulver.

Anschließend wurde die Reaktortemperatur auf 150°C abgesenkt. Die Carbonylvorlage wurde ausgetauscht gegen eine mit 10 ml $POCl_3$ beschickte und auf 70°C erwärmte Vorlage. Durch Einleiten von 200 l/h Stickstoff wurde innerhalb von ungefähr 2 Stunden die gesamte $POCl_3$-Menge in den Reaktor als Dampf eingedüst. Der für die Zersetzung des $POCl_3$-Dampfes benötigte feuchte Stickstoff (400 l/h) wurde analog Bsp. 1 erzeugt und in den Reaktor eingebracht.

Das fertige Pigment enthielt 0,18 Gew.-% P. Im Kochtest erzeugte das gasphasenphosphatierte Pigment innerhalb von 25 Stunden 300 ml Wasserstoff. Die oben beschriebene Polierung der passivierten Pigmente verändert die Stabilität gegenüber Wasser nicht negativ.

Vergleichsbeispiel 2

Die als Ausgangsmaterial für die Passivierung in Beispiel 2 verwendete eisenoxidbelegte Probe wurde dem Kochtest unterworfen. Sie zersetzte sich im Kochtest innerhalb von etwa 10 Minuten vollständig.

Beispiel 3

500 g des eisenoxidbeschichteten, goldfarbenen Aluminiumpigments, dessen Herstellung analog Beispiel 2 durchgeführt wurde, wurden in einem etwas größeren, aber sonst baugleichen Reaktor (Innendurchmesser 16 cm) unter Verwendung von Trimethylphosphit passiviert.

Die Passivierung wurde bei einer Reaktortemperatur von 200°C durchgeführt. Zur Verwirbelung der plättchenförmigen Substrate wurden 1400 l/h Stickstoff mit 90 l/h Luft gemischt und in den unteren Teil des Reaktors eingeblasen. Die Hälfte dieses Gasstroms wurde vorher durch eine auf 50°C temperierte und mit Wasser beschickte Vorlage geleitet und so mit Wasserdampf beladen. In ein weiteres Verdampfergefäß wurden 25 ml Trimethylphosphit eingefüllt und bei Raumtemperatur durch Überleiten von 260 l/h Stickstoff innerhalb von 3 Stunden in den Reaktor überführt.

Das fertige Pigment enthielt 1 Gew.-% P. Im Kochtest erzeugte das so beschichtete und anschließend polierte Pigment innerhalb von 24 Stunden 150 ml Wasserstoff.

Beispiel 4

400 g einer Aluminiumpigment-Mischung, wie sie in Beispiel 1 beschrieben ist, wurden im Wirbelbettreaktor des Beispiels 4 unter Verwendung von Trimethylphosphit passiviert.

Die Passivierung wurde bei einer Reaktortemperatur von 200°C durchgeführt. Zur Verwirbelung der plättchenförmigen Substrate wurden 1400 l/h Stickstoff mit 90 l/h Luft gemischt und in den unteren Teil des Reaktors eingeblasen. Die Hälfte dieses Gasstroms wurde vorher durch eine auf 50°C temperierte und mit Wasser beschickte Vorlage geleitet und so mit Wasserdampf beladen. In ein weiteres Verdampfergefäß wurden 50 ml Trimethylphosphit eingefüllt und bei Raumtemperatur durch Überleiten von 260 l/h Stickstoff innerhalb von 3 Stunden in den Reaktor überführt.

Das fertige Pigment enthielt 1,4 Gew.-% P. Im Kochtest erzeugte das so beschichtete und anschließend polierte Pigment innerhalb von 24 Stunden 160 ml Wasserstoff.

**Patentansprüche**

1. Verfahren zur Passivierung von Metallpigmenten gegen hydroxylgruppenhaltige Verbindungen, dadurch gekennzeichnet, daß man verdampfbare Phosphorverbindungen und/oder Chromylchlorid in Anwesenheit von Wasserdampf in Gegenwart der Metallpigmente in der Gasphase zersetzt.

2. Verfahren nach Anspruch 1, dadurch gekennzeichnet, daß man als Phosphorverbindungen Phosphoroxyhalogenide, Tri- oder Di-(C$_1$-C$_2$-alkyl)ester der phosphorigen Säure oder Tri- oder Di-(C$_2$-C$_4$-alkyl) ester der Phosphorsäure verwendet.

3. Verfahren nach Anspruch 1 oder 2, dadurch gekennzeichnet, daß man die Passivierung bei Temperaturen von 100 bis 350°C vornimmt.

4. Verfahren nach den Ansprüchen 1 bis 3, dadurch gekennzeichnet, daß man unbeschichtete oder metalloxidbeschichtete Metallpigmente aus Eisen, Eisenlegierungen, Kupfer, Kupferlegierungen, Aluminium oder Aluminiumlegierungen passiviert.

5. Verfahren nach den Ansprüchen 1 bis 4, dadurch gekennzeichnet, daß man die Metallpigmente gegen Wasser passiviert.

**Claims**

1. A process for passivating metal pigments to hydroxyl-containing compounds, which comprises, in the presence of the metal pigments, decomposing vaporizable phosphorus compounds and/or chromyl chloride in the gas phase in the presence of water vapor.

2. A process as claimed in claim 1, wherein the phosphorus compounds used are phosphoryl halides, tri- or di(C$_1$-C$_2$-alkyl) esters of phosphorous acid or tri- or di(C$_1$-C$_4$-alkyl) esters of phosphoric acid.

3. A process as claimed in claim 1 or 2, wherein the passivation is effected at from 100 to 350°C.

4. A process as claimed in any of claims 1 to 3, wherein uncoated or metal-oxide-coated metal pigments of iron, iron alloys, copper, copper alloys, aluminum or aluminum alloys are passivated.

5. A process as claimed in any of claims 1 to 4, wherein the metal pigments are passivated to water.

**Revendications**

1. Procédé de passivation de pigments métalliques à l'égard de composés contenant des groupements hydroxyle, caractérisé en ce qu'en présence des pigments métalliques, on décompose en phase gazeuse des composés du phosphore volatilisables et/ou du chlorure de chromyle en présence de vapeur d'eau.

2. Procédé selon la revendication 1, caractérisé en ce que l'on utilise, comme composés du phosphore, des oxyhalogénures de phosphore, des esters tri- ou di-(alkyliques en C$_1$-C$_2$) de l'acide phosphoreux ou des esters tri- ou di-(alkyliques en C$_1$-C$_4$) de l'acide phosphorique.

3. Procédé selon la revendication 1 ou 2, caractérisé en ce que l'on effectue la passivation à des températures de 100 à 350°C.

4. Procédé selon l'une quelconque des revendications 1 à 3, caractérisé en ce que l'on passive des pigments métalliques de fer, d'alliages de fer, de cuivre, d'alliages de cuivre, d'aluminium ou d'alliages d'aluminium, non revêtus ou revêtus d'oxydes métalliques,

5. Procédé selon l'une quelconque des revendications 1 à 4, caractérisé en ce que l'on passive les pigments métalliques à l'égard de l'eau.